# EUROPÄISCHE PATENTSCHRIFT

(11) **EP 1 159 217 B1**
(45) Veröffentlichungstag und Bekanntmachung des Hinweises auf die Patenterteilung: **09.04.2003**
(21) Anmeldenummer: 99964575.7
(22) Anmeldetag: 15.12.1999
(51) Int. Cl.: B65H 54/28, H02K 33/18

(54) **FADENFÜHRER ZUM TRAVERSIERENDEN ZUFÜHREN EINES FADENS ZU EINER ROTIEREND ANGETRIEBENEN AUFLAUFSPULE**
THREAD GUIDE FOR TRAVERSING A THREAD IN A ROTATING WINDING BOBBIN
GUIDE-FIL POUR L'AMENEE TRAVERSANTE D'UN FIL A UNE BOBINE RECEPTRICE ENTRAINEE EN ROTATION

(30) Priorität: 18.12.1998 DE 19858547
(43) Veröffentlichungstag der Anmeldung: 05.12.2001
(73) Patentinhaber: W. SCHLAFHORST AG & CO., 41061 Mönchengladbach (DE)
(72) Erfinder: HERMANNS, Ferdinand-Josef, D-41812 Erkelenz (DE); FLAMM, Franz-Josef, D-52224 Stolberg (DE); STURM, Christian, D-47798 Krefeld (DE)
(74) Vertreter: Hamann, Arndt, Dipl.-Ing.
(86) Internationale Anmeldenummer: EP9909945
(87) Internationale Veröffentlichungsnummer: WO00037345

(56) Entgegenhaltungen:
- EP-A- 0 453 622
- EP-A- 0 838 422
- CH-A- 599 706
- DE-A- 3 907 125
- DE-A- 19 820 464
- US-A- 4 398 167
- PATENT ABSTRACTS OF JAPAN vol. 1996, no. 12, 26. Dezember 1996 (1996-12-26) & JP 08 217332 A (MURATA MACH LTD), 27. August 1996 (1996-08-27)

## Beschreibung

Fadenführer zum traversierenden Zuführen eines Fadens zu einer rotierend angetriebenen Auflaufspule

Die Erfindung betrifft einen Fadenführer zum traversierenden Zuführen eines Fadens zu einer rotierend angetriebenen Auflaufspule für die Erzeugung einer Kreuzspule in einer Spuleinrichtung einer Textilmaschine mit den Merkmalen des Oberbegriffes des ersten Anspruches.

Um Textilspulen zu erzeugen, ist es prinzipiell notwendig, zum einen die Spule in Rotation zu versetzen und zum anderen den auf die rotierende Spule auflaufenden Faden längs der Spulenachse zu traversieren. Wird der Faden sehr langsam traversiert, entsteht eine Spule mit weitestgehend parallelen Windungen. Soll eine solche Spule ein größeres Volumen und im wesentlichen rechtwinklig zur Spulenachse angeordnete flache Stirnseiten besitzen, sind beidseits der Wicklung Begrenzungsscheiben erforderlich. Diese Begrenzungsscheiben können vermieden werden, wenn der Faden so schnell traversiert wird, daß sich eine Kreuzbewicklung ergibt. Hohe Wicklungsgeschwindigkeiten erfordern dann auch eine sehr hohe Traversierrate.

Hierfür können parallel zur Spulenachse orientierte Antriebsmittel, wie zum Beispiel Riemen, eingesetzt werden. Die EP 0 311 827 A2 beschreibt einen solchen Fadenführer, bei dem der Riemen mittels eines mikroprozessorgesteuerten Schrittmotors angetrieben wird. Dabei können hohe Changiergeschwindigkeiten erzielt und der Fadenführer relativ präzise gesteuert werden.

Auch in der EP 0 453 622 B1 ist ein grob zur Kategorie der Riemenfadenführer gehörender Fadenführer beschrieben, der mittels eines entsprechend angesteuerten Schrittmotors oder auch elektronisch kommutierten Scheibenläufermotors verschiedenartigste Wicklungsbilder erzeugen kann. Der Motor ist dabei mit einem Treibrad gekoppelt, um welches eine einen Fadenführerträger für den Fadenführer tragende Saite mehrfach geschlungen ist. Auf der gleichen Achse ist ein Zahnrad angeordnet, welches mit zwei beidseitig angeordneten Zahnrädern kämmt. Diese beiden Zahnräder sind ihrerseits auf Torsionsstäben befestigt, die jeweils so vorgespannt sind, daß sie über das gesamte Changierintervall des Fadenführers gegenüber ihrer Gleichgewichtsposition ausgelenkt sind. Damit sollen Lastwechsel vermieden werden, die insbesondere bei hohen Changiergeschwindigkeiten zur Beschädigung des Zahnradgetriebes führen könnten.

Durch die Verwendung der Torsionsstäbe soll die im Bereich der Umkehrpunkte des Fadenführers erforderliche hohe Winkelbeschleunigung ermöglicht werden. Zur Verstärkung dieses Effektes sind Kupplungen vorhanden, die vor Erreichen der Umkehrpunkte die Torsionsstäbe nahe des Zahnradgetriebes fixieren sollen, um damit eine Verkürzung der wirksamen Länge der Torsionsstäbe in Verbindung mit einer schlagartigen Veränderung der Federkonstante zu bewirken.

Zum einen stellt diese Konstruktion extrem hohe Anforderungen an die mechanischen Teile der Kupplungen, zum anderen wird auch das Zahnradgetriebe hierdurch nicht unerheblich belastet. Insgesamt tragen der Fadenführer, sein in einer Gleitschiene verschiebbarer Fadenführerträger, die den Fadenführerträger bewegende Saite, Umlenkrollen für diese Saite und das Zahnradgetriebe zur Trägheit des Gesamtsystemes bei, was sich insbesondere an den Umkehrpunkten des Traversierbereiches negativ auswirkt.

Sehr verbreitet zur Erzeugung der Changierbewegungen sind auch sogenannte Kehrgewindewalzen, die bei schnell laufenden Spulmaschinen oftmals gleichzeitig den Umfangsantrieb für die Kreuzspule bewirken. Dabei ist jedoch ein, unabhängig von der Spulenfülle, immer gleicher Verlegewinkel gegeben, wobei bei bestimmten Drehzahlverhältnissen zwischen Spule und Antriebswalze sogenannte Wicklungsbilder entstehen, die beim späteren Abspulen zu erheblichen Problemen führen. Deshalb sind im Stand der Technik eine Vielzahl von sogenannten Bildstörverfahren beschrieben.

Um ein vorgegebenes Wicklungsbild, zum Beispiel eine Präzisions- oder Stufenpräzisionswicklung, erzeugen zu können, muß deshalb der Antrieb der Spule vom Fadenführer getrennt werden. Dies ist unter anderem auch dadurch möglich, daß die bereits erwähnte Kehrgewindewalze beabstandet von der Auflaufspule angeordnet ist und separat angetrieben wird. In der Kehrgewindenut gleitet dann in der Regel ein Fadenführer. Dieses System ist trägheitsbedingt mit Nachteilen belastet.

Seit langem sind auch sogenannte Fingerfadenführer bekannt (zum Beispiel DE-AS 11 31 575, DE-OS 15 60 360), bei denen ein Fadenführerfinger um eine im wesentlichen senkrecht zur Auflaufspulenachse angeordnete Achse schwenkbar ist. Bei diesen Fingerfadenführern erfolgt die Übertragung der Schwingbewegung ebenfalls formschlüssig mittels einer Nutenscheibe, entweder direkt auf den Fingerfadenführer, wie bei der DE-OS 15 60 360 oder über eine Changierstange, an der ein Doppelhebel federnd aufgehängt ist, der seinerseits in den fingerförmigen Fadenführer eingreift, wie bei der DE-AS 11 31 575. Der Doppelhebel erhält zusätzlich an den Umkehrpunkten durch ein Widerlager einen Impuls, der die schnelle Bewegungsrichtungsumkehr am Rande der Changierzone begünstigt. Der Anschlag führt in diesem Falle allerdings nicht zu einer erheblichen Geräuschemission oder zur Reduzierung der Lebensdauer der Einrichtung, da die Erfindung zur Erzeugung von Scheibenspulen genutzt wird, bei denen nur ein sehr geringer Verlegewinkel angewandt wird. Bei beiden Fingerfadenführern ist von Vorteil, daß der Finger selbst den Fadenführer bildet, ohne daß hier zusätzlich ein die Trägheit erhöhendes Gleitstück erforderlich ist. Dennoch sind auch diese Fadenführer hinsichtlich der Flexibilität der Fadenchangierung eingeschränkt.

Für die anstelle der beschriebenen konventionellen mechanischen Antriebe der als Fadenführer dienenden Finger sind mittlerweile elektromechanische Antriebe vorgeschlagen worden, wie sie beispielsweise in der EP 0 808 791 A2 oder der gattungsbildenden EP 0 838 442 A1 angedeutet sind.

Die in der EP 0 838 422 A1 an den Hubenden des Fadenführers beschriebenen und dargestellten Energiespeicher sollen die Bewegungsrichtungsumkehr des Fadenführers unterstützen und dadurch sowohl dessen Antrieb entlasten als auch die Verweilzeit an den Hubenden verringern. Die Energiespeicher sind in ihrer Position mechanisch verstellbar, so daß der Hub des Fadenführers verstellt werden kann, um zum Beispiel aufgewölbte Kanten an der Kreuzspule zu vermeiden. Dieses Dokument ist als nächstliegenden Stand der Technik anzusehen.

Derartige Energiespeicher führen dazu, daß durch das relativ ruckartige Abbremsen des Fadenführers beim Eintauchen in den jeweiligen Energiespeicher die Lebensdauer des Verlegesystems verringert oder dieses eine solche Stabilität aufweisen muß, daß sich dessen Masse und damit Massenträgheit erhöht. Bei Changierfrequenzen von 30 Hz und mehr spielt jedoch die Massenträgheit bereits eine erhebliche Rolle für den Antrieb. Außerdem wird beim Aufschlagen des Fadenführers auf die Energiespeicher ein Geräusch erzeugt, welches sich über üblich lange Textilmaschinen entsprechend aufsummiert.

Wird der Antrieb des Fadenführers durch einen Realer geregelt, ergeben sich im Bereich des Eintauchens des Fadenführers in die Energiespeicher Lastsprünge, die die Regelgüte des Reglers beeinträchtigen.

Es ist deshalb Aufgabe der Erfindung, das Schwingungsverhalten des Fadenführers zu verbessern.

Diese Aufgabe wird erfindungsgemäß durch die kennzeichnenden Merkmale des ersten Anspruches gelöst.

Die Erfindung ist vorteilhaft durch die Merkmale der Ansprüche 2 bis 16 weitergebildet.

Die direkte Verbindung des Fadenführers mit einem mechanischen Energiespeicher führt dazu, daß keinerlei mittelbare Übertragung von Kräften erforderlich ist. Die einzige ein Trägheitsmoment erzeugende Masse wird durch den Fadenführer selbst gebildet. Dadurch wird die Dynamik des Systemes gegenüber dem Stand der Technik deutlich verbessert. Die Trägheitskräfte und -momente im Bereich der erheblichen Winkelbeschleunigungen an den Umkehrpunkten sind sehr gering. Ohne erheblichen Energieaufwand kann im Bereich der Traversierendbereiche eine sehr schnelle Bewegungsrichtungsumkehr erreicht werden.

Dabei ist darauf hinzuweisen, daß gemäß vorliegender Erfindung als Fadenführer der gesamte Schwingkörper aus Fadenführerfinger, der ihn tragenden Welle sowie der dem Antrieb dienenden Spule mit ihrem Träger bezeichnet ist.

Es ist möglich, die Verlegebreite ausschließlich durch den Antrieb, das heißt, durch Steuern beziehungsweise Regeln zu ändern. Es ist hierfür keinerlei mechanische Verstellung erforderlich, wenn der Energiespeicher für einen maximalen Fadenführerhub ausgelegt ist. Da bei einem größeren Hub auch das im Bereich der Bewegungsrichtungsumkehr erforderliche Moment größer ist, ist die bei einem größeren Hub entstehende höhere potentielle Energie des Energiespeichers von Nutzen. Durch den ruckfreien Betrieb des Fadenführers wird der Lärmpegel gesenkt und dessen Lebensdauer steigt. Außerdem ist die Regelgüte des Reglers verbessert und ein präzises Einhalten der Verlegebreite vereinfacht.

Besonders vorteilhaft bei dem erfindungsgemäßen Fadenführer ist der Einsatz einer Drehfeder, speziell einer Spiralfeder. Bei einer hier in Frage kommenden Schwingungsämplitude von zum Beispiel 60 bis 70° besitzt eine derartige Spiralfeder auch links und rechts des Nullpunktes den gleichen Verlauf ihrer Federkennlinie. Jedoch können auch zwei Spiralfedern eingesetzt werden, die dann zusätzlich der Stromzuführung zu einer Spule eines Antriebes des Fadenführers dienen können.

Ist die Windungsrichtung der Spiralfedern entgegengesetzt, wird in jedem Falle in beiden Schwingungsrichtungen der gleiche Federmomentverlauf erreicht. Dieses Erfordernis gewinnt, wie bereits erwähnt, aber erst dann Bedeutung, wenn der Winkel der Auslenkung aus der Ruhestellung des Fadenführers einen Grenzwert übersteigt, da sich der Verlauf der Federkennlinie beim Öffnen und Schließen der Feder dann unterscheidet.

Während der Energiespeicher ohnehin die Fläche unter dem Graphen des Antriebsmomentenquadrates auf bis zu einem Drittel des Wertes, der ohne einen solchen Energiespeicher notwendig wäre, reduziert, führt die Einstellung der Resonanzfrequenz des schwingenden Systems an der Obergrenze der benötigten Schwingfrequenz dazu, daß die Unterstützung der Schwingbewegung und damit Entlastung des elektromechanischen Antriebes in Extremsituationen besonders intenstiv ist.

Durch die Justierbarkeit der Arretierung des Energiespeichers wird sichergestellt, daß der Energiespeicher die Schwingbewegung in beiden Richtungen im gleichen Maße unterstützt.

Ebenso besteht selbstverständlich die Möglichkeit, von vornherein die Auswahl der Federn so zu treffen, daß deren Federkennlinie weitestgehend dem gewünschten Schwingungsverhalten entspricht. Hierbei ist es sogar wünschenswert, daß die Federkennlinie nicht geradlinig verläuft, sondern nach den Umkehrpunkten hin progressiv zunimmt, wie bereits erwähnt. Zur Optimierung sollte die Dimensionierung der Feder so ausgewählt werden, daß das Integral unter dem Antriebsmomentenquadrat am geringsten wird. Dadurch ist die erforderliche Leistungsaufnahme des Antriebes für den Fadenführer am geringsten.

Die Flexibilität des Schwingsystemes kann noch weiter verbessert werden, wenn zusätzlich die Aufhängung der mindestens einen Feder während der Schwingbewegung des Fadenführers gesteuert verstellt wird. Insbesondere in einem Bereich einer geringeren Schwingfrequenz, zum Beispiel 5 Hz, ist die Federunterstützung im Umkehrbereich des Fadenführers nicht oder nur in geringem Umfang erforderlich. Im übrigen Schwingbereich außerhalb der Schwingungstotpunkte, in dem keine Winkelbeschleunigung vorliegt, muß durch den elektrischen Antrieb des Fadenführers die Energie aufgebracht werden, um jeweils die Feder oder bei Verwendung einer zusätzlichen Feder die beiden Federn zu spannen. Diese Energie kann dadurch reduziert werden, daß praktisch die Aufhängung der mindestens einen Feder synchron mitschwingt. Das heißt, bei sehr niedrigen Schwingfrequenzen könnte sogar ein Mitschwingen der Aufhängung mit gleicher Amplitude erfolgen. Bei der Ermittlung der Energiebilanz muß dann jedoch auch der Antrieb für die Aufhängung mit einbezogen werden. Deshalb kann es abhängig von den konkreten Bedingungen von Vorteil sein, die Aufhängung zwar mit der gleichen Frequenz, jedoch mit verringerter Amplitude mitschwingen zu lasssen. Das Spannen der Feder erfolgt dann lediglich im unteren Bereich der Federkennlinie.

Mit höher werdender Frequenz nimmt das Erfordernis der Unterstützung der Bewegungsrichtungsumkehr zu. Aus diesem Grunde ist eine Entlastung der Feder für den Bereich der Umkehrpunkte nachteilig. Durch entsprechende Phasenverschiebung zwischen der Schwingbewegung der Aufhängung und des Fadenführers läßt sich die im Bereich der Umkehrpunkte gespeicherte potentielle Federenergie deutlich erhöhen. Auf diese weise ist jedoch für eine feste Frequenz weitestgehend nur ein Effekt zu erzielen, der auch mit einer stärkeren Feder oder einer Mehrzahl von Federn erreichbar wäre.

Die Flexibilität des Systemes bietet aber die Möglichkeit, über den größeren Teil des Hubes die Feder durch gleichgerichtetes Mitschwingen der Aufhängung zu entlasten und erst unmittelbar vor Erreichen des Umkehrpunktes durch zügige Umschaltung der Schwingbewegung der Aufhängung in die Gegenrichtung die Federkraft deutlich zu verstärken.

Auf diese Weise entsteht eine "schwache Feder" über den größten Teil der Hublänge und eine sehr starke Feder in den Umkehrpunkten. Dies entspricht exakt der gewünschten Unterstützung der Schwingbewegung des Fadenführers. Dabei wird jedoch nicht, wie beim Stand der Technik, durch schlagartige Einleitung einer Federkraft oder Verstellung einer Federkonstante das System, wie bereits ausgeführt, nachteilig beeinflußt. Die auf diese Weise erzielbare Flexibilität hinsichtlich der Unterstützung beliebiger Schwingbewegungen ist durch keine der aus dem Stand der Technik bekannten Lösungen nahegelegt.

Die durch das mechanische Schwingsystem hohe Flexibilität der Bewegung des Fadenführers hinsichtlich Schwingungsfrequenz, Schwingungsamplitude und gleichmäßigem Schwingungsverlauf über einen Hub wird durch das des weiteren beanspruchte Antriebssystem zusätzlich gestützt.

Innerhalb des erfindungsgemäßen Luftspaltes kann eine relativ hohe-Magnetflußdichte erreicht werden, wobei die Verluste bei geringer Dimensionierung des Luftspaltes und ausreichender Dimensionierung der einen geringen magnetischen Widerstand aufweisenden Joche gering sind. Durch Bestromen der Spule, die sich im Bereich der Magnetfeldlinien befindet, wird das zum Auslenken des Fadenführers erforderliche Moment erzielt.

Die Dimensionierung der Spule steht in engem Zusammenhang mit der Anpassung an die Spaltbreite des erfindungsgemäßen, durch Magnetlinien durchfluteten Luftspaltes. Der Abstand der im Luftspalt verlaufenden Windungsstränge der Spule zur Schwenkachse des Fadenführers beeinflußt die durch den Antrieb erzeugbare Größe des Momentes. Dieses Moment ist im Verhältnis zum Massenträgheitsmoment der Spule hoch. Die übrigen Teile des an der Schwingung beteiligten Körpers lassen sich aus sehr leichtem Werkstoff fertigen und müssen lediglich die für die auftretenden Kräfte erforderliche Stabilität besitzen, so daß sich ein geringes Massenträgheitsmoment ergibt.

Die Größe und Richtung des Momentes wird durch Steuern beziehungsweise Regeln der Spannung und damit des Stromes in jeder Phase der Bewegung eingestellt. Dies kann über eine Steuervorrichtung, zum Beispiel einen Mikroprozessor, erfolgen, der Stromstärke und Stromrichtung nach einem vorgebbaren Programm winkel- und zeitabhängig so steuert, daß sich über die Traversierbreite der jeweils gewünschte Verlegewinkel des Fadens ergibt beziehungsweise auch die Traversierbreite oder die Traversierendpunkte eingestellt werden können. Durch entsprechende Sensorik wird der jeweilige Winkel erfaßt, die Einhaltung des Soll-Wertes überprüft und erforderlichenfalls der Ist-Wert dem Soll-Wert durch Regeln wieder angepaßt. Hierzu lassen sich bekannte PID-Regler einsetzen, während zur Erfassung des Momentanwinkels zum Beispiel eine bekannte Infrarotlichtschranke eingesetzt werden kann, die konzentrisch zur Schwingachse angeordnete Markierungen abtastet.

Der Luftspalt und damit auch alle Elemente zur Erzeugung des magnetischen Feldes brauchen sich lediglich über den Schwenkbereich der elektrischen Spule zu erstrecken, der dem maximal einstellbaren Traversierhub des Fadenführers entspricht. Damit ist der bauliche Aufwand entsprechend eingeschränkt. Ebenso ist nur eine elektrische Spule erforderlich, die sich während des Schwingens entlang des entsprechend dimensionierten Schlitzes auf und ab bewegt. Wie erwähnt, ist es von besonderere Bedeutung, daß die an der Schwenkbewegung teilnehmenden Elemente, je weiter sie vom Drehpunkt entfernt sind, eine umso geringere Masse aufweisen dürfen, da im Bereich der Totpunkte der Schwingung des Fadenführers erhebliche Winkelbeschleunigungen zu realisieren und demzufolge bei hohem Massenträgheitsmoment der schwingenden Teile sehr hohe Momente aufzubringen sind. Hier ist zu berücksichtigen, daß bei der Herstellung von Kreuzspulen auf Spulmaschinen Schwingfrequenzen des Fadenführers im Bereich bis zu 30 Hz erforderlich sind.

Gegenüber einem elektronisch kommutierten Motor, bei dem eine Kommutierung während der gleichbleibenden Wirkungsrichtung des Antriebsmomentes notwendig ist, führt bei vorliegender Erfindung eine Stromrichtungsänderung unmittelbar zur Umkehr des Vorzeichens des Antriebsmomentes. Dies wiederum vereinfacht die Ansteuerung des Direktantriebes des schwingenden Fadenführers.

Die Erfindung soll nachfolgend anhand von Ausführungsbeispielen näher erläutert werden. In den zugehörigen Zeichnungen zeigen :
- Fig. 1: eine Vorderansicht eines erfindungsgemäßen Fadenführers mit elektromechanischem Antrieb, teilweise geschnitten an I-I gem. Fig. 2,
- Fig. 2: ein Schnitt II-II zu Fig. 1,
- Fig. 3: eine Vorderansicht einer Variante des erfindungsgemäßen Fadenführers mit Antrieb der Federaufhängung, teilweise geschnitten an III-III gem. Fig.4,
- Fig. 4: ein Schnitt IV-IV zu Fig. 3,
- Fig. 5: ein Diagramm der an einer Schwingungserzeugung beteiligten Antriebsmomente bei 5Hz Schwingfrequenz (Fig. 5a), des Verlaufes der Winkelverstellung der Federaufhängung (Fig. 5b) und der zugehörigen Winkelgeschwindigkeit (Fig. 5c) und
- Fig. 6: den Verlauf der Antriebsmomente bei einer Schwingfrequenz von 20 Hz (Fig. 6a), den Verlauf der Winkelverstellung der Aufhängung (Fig. 6b) und die zugehörigen Winkelgeschwindigkeiten (Fig. 6c).

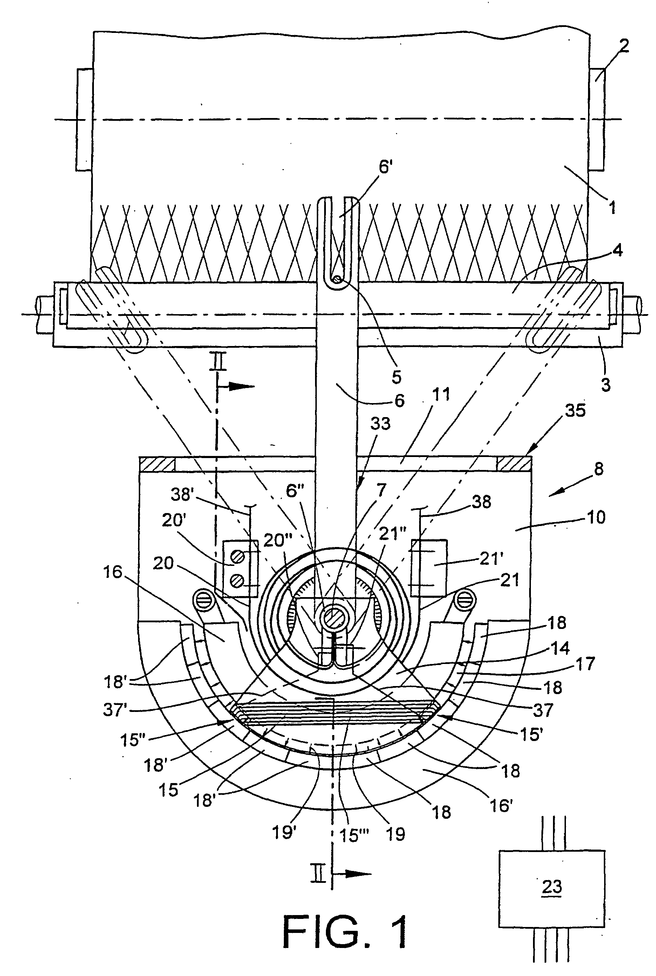

Bei dem in Fig. 1 dargestellten Ausschnitt einer Spuleinrichtung ist eine Kreuzspule 1 zu erkennen, die auf einer Stützwalze 3 aufliegt. Die Kreuzspule 1 ist mit ihrer Spulenhülse 2 in einem nicht dargestellten Spulenrahmen gelagert. Der Antrieb der Kreuzspule kann über einen der Hülsenteller des Spulenrahmens erfolgen, die die Spulenhülse 2 zwischen sich klemmen. Alternativ kann anstelle der Stützwalze 3 eine Antriebswalze vorgesehen werden, durch die im Vergleich zu dem genannten direkten Antrieb der Kreuzspule 1 ein Umfangsantrieb erfolgt.

Der der Kreuzspule 1 zugeführte Faden 5 wird innerhalb eines gabelförmigen Führungselementes 6' des Fadenführerfingers 6 geführt. Ein Changierlineal 4 sorgt für die Geradführung des Fadens, die erforderlich ist, damit der Faden immer in einem gleichbleibenden und möglichst kurzen Abstand zur Klemmlinie zwischen Stützwalze 3 und Kreuzspule 1 der Kreuzspule zugeführt wird. Dies ist zur Erzielung einer zufriedenstellenden Bewicklungstruktur der Kreuzspule 1 erforderlich.

Anstelle der Geradführung über das Changierlineal 4 wäre auch denkbar, einen eine Fadenführungsöse enthaltenden Körper, der entlang der Position des Changierlineals 4 verschiebbar gelagert ist, mit einem Hebel anzutreiben, der dem Fadenführerfinger 6 entspricht. Hierbei ist jedoch zu bedenken, daß dadurch zusätzliche Trägheits- und Reibungskräfte zu überwinden sind, die sich bei hohen Changierfrequenzen nachteilig auf das Gesamtsystem auswirken.

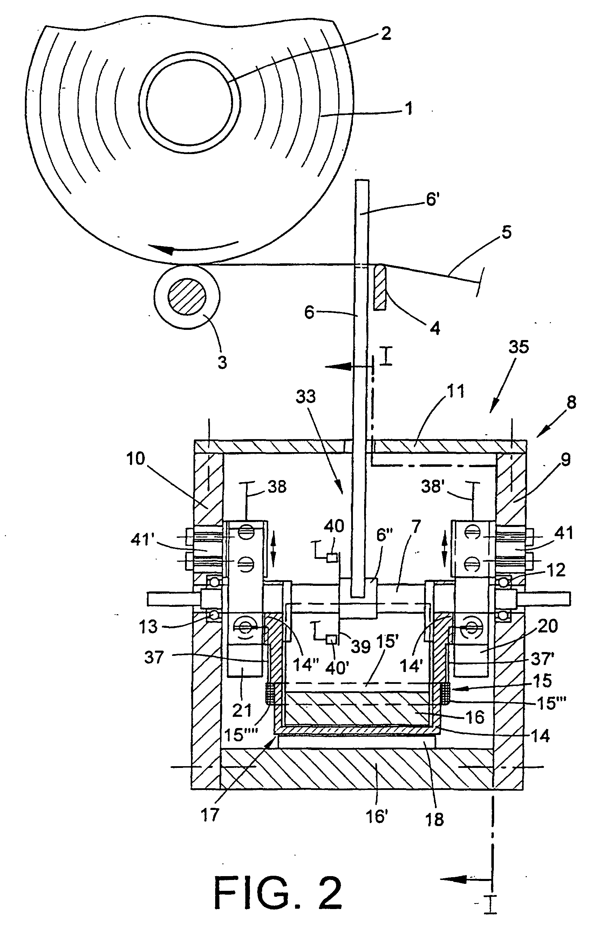

Der Fadenführerfinger 6 ist über eine Halterung 6'' auf einer Welle 7 befestigt, mit der sowie einem weiter unten näher beschriebenen Spulenträger 14 mit Spule 15 er den insgesamt als Fadenführer 33 bezeichneten Schwingkörper bildet. Die Welle 7 ist, wie aus Fig. 2 ersichtlich, in Wälzlagern 12 und 13 gelagert, die in Seitenwänden 9 und 10 eines Gehäuses 8 angeordnet sind. Um das trägheitsbedingte Weiterdrehen der Wälzkörper bei der Bewegungsrichtungsumkehr des Fadenführers 33 zu begrenzen, kann das Wälzlager stärker als üblich verspannt werden. Alternativ ist aber auch denkbar, andere Lager, zum Beispiel auf magnetischer Basis, einzusetzen.

Ebenfalls auf der Welle 7 befestigt ist ein schaukelförmiger Spulenträger 14. Seitliche zungenförmige Ausleger 14' und 14'' dieses Spulenträgers sind mit einer nach innen ragenden Zunge der aus metallischem Bandmaterial hergestellten Spiralfedern 20 und 21 drehfest verbunden. Die beiden Spiralfedern 20 und 21 sind in entgegengesetzten Drehrichtungen gewickelt. Eine Spule 15 ist auf den Spulenträger 14 so gewickelt, daß deren Mittelachse die Drehachse des Fadenführers 33 schneidet.

An den Seitenwänden 9 und 10 des Gehäuses 8 des Antriebes 35 sind Halterungen 20' und 21' der Drehfedern 20 und 21 befestigt. In diese Halterungen 20' und 21' sind die beiden Drehfedern 20 und 21 fest eingespannt.

Wie in Fig. 2 durch Doppelpfeile angedeutet, sind die Halterungen in ihrer Position bezüglich der Seitenwände 9 und 10 durch Verschieben in Langlöchern 41 und 41' justierbar. Diese Justierbarkeit ist zumindest für eine der beiden Halterungen erforderlich, um zu erreichen, daß der Fadenführer 33 in seiner Ruhelage die Mittenlage im Bereich der Schwingungsamplitude einnimmt. Die Justierung beider Drehfedern ermöglicht, daß diese Mittenlage gleichzeitig den Nullpunkt beider Federkennlinien darstellt.

Die Stromzuführung zur Spule 15 erfolgt über Zuleitungen 38 und 38' zu den Halterungen 20' und 21', über die Drehfedern 20 und 21 bis zu deren Befestigungspunkten an der Welle 7 und von dort über Zuleitungen 37 und 37' zur Spule 15. Auf diese Weise wird gewährleistet, daß die jeweiligen festen Zuleitungen keiner Relativbewegung ausgesetzt sind. Die Relativbewegung wird von den Spiralfedern 20 und 21 aufgenommen. Selbstverständlich sind jedoch auch ändere Zuleitungen denkbar, die eine hohe Flexibilität besitzen. Um dabei die Bewegung einzugrenzen, sollten diese Zuleitungen möglichst nahe an der Achse 7 liegen.

Ein aus ferromagnetischem Material bestehendes Innenjoch 16 hat, wie in Fig. 1 ersichtlich, die Form eines Ringsegmentes und, wie aus Fig. 2 ersichtlich, einen rechteckigen Querschnitt. Gegenüber dem Außenumfang des ringsegmentartigen Innenjoches 16 ist auf einem ebenfalls ringsegmentartigen Außenjoch 16' eine Magnetanordnung 18, 18' befestigt. Zwischen dem Außenumfang des Innenjoches 16 und der Magnetanordnung 18, 18' ist ein Luftspalt 17 ausgebildet, der eine über seine Länge gleichbleibende Spaltbreite aufweist. Diese gleichbleibende Spaltbreite ist jedoch kein zwingendes Erfordernis. So könnte beispielsweise der Luftspalt 17 jeweils in der Mitte der linken und der rechten Hälfte des Luftspaltes 17 breiter sein und dadurch das Magnetfeld schwächen, da sich die aktiven Windungsstränge 15 und 15' dort befinden; wenn der Fadenführer 33 seine Mittenposition einnimmt, in der nur ein geringes oder kein Antriebsmoment benötigt wird.

Die Magnete sind links und rechts des Mittelpunktes des Schwenkweges der Spule 15 unterschiedlich gepolt. Dadurch ergeben sich im Bereich der Magnete 18 Magnetflußlinien 19, die im wesentlichen auf den Drehpunkt des Fadenführers ausgerichtet sind, während im Bereich der Magnete 18' Magnetfeldlinien 19' ausgebildet sind, die vom Drehpunkt des Fadenführers wegzeigen.

Die durch die Joche 16 und 16' verlaufenden Feldlinien sind aus Übersichtsgründen nicht dargestellt. Sie bilden jedoch in beiden Jochen 16 und 16' Brücken aus, wobei durch die Mitte der U-förmigen Joche alle Magnetfeldlinien verlaufen. Deshalb ist es auch möglich, die Joche im Randbereich mit einem deutlich reduzierten Querschnitt gegenüber der Mitte auszubilden.

In jedem der beiden Teile des Luftspaltes 17, die sich durch die Richtung der Magnetfeldlinien unterscheiden, verläuft während der gesamten Schwenkbewegung des Fadenführers 33 jeweils einer der beiden Wicklungsstränge 15' beziehungsweise 15" der elektrischen Spule 15. Da sich aufgrund der wicklungsebene der Spule 15 in den beiden Wicklungssträngen 15' und 15" zwangsläufig auch unterschiedliche Stromrichtungen ergeben, ist das durch die Magnetfeldlinien 19 und 19' dargestellte Magnetfeld auf die Windungsstränge 15 und 15' ausgeübte Moment mit dem gleichen Vorzeichen versehen. Der Bogenabstand der beiden Windungsstränge 15' und 15" zueinander ist größer als der bei einem maximalen Schwenkwinkel des Fadenführers 33 entlang des Luftspaltes 17 zurückgelegte Weg. Dadurch verbleibt während des gesamten Schwenkweges jeder der beiden Windungsschenkel 15' und 15" innerhalb eines Bereiches des Luftspaltes, in dem die Magnetfeldlinien 19 beziehungsweise 19' in derselben Richtung verlaufen. Dadurch ist über den gesamten Schwenkweg Strom und Moment, insbesondere in Bezug auf die Vorzeichen, proportional. Dadurch läßt sich der Steuerbeziehungsweise Regelungsaufwand gering halten.

Das Gehäuse 8 ist mit einem Deckel 11 versehen, der einen Schlitz enthält, in dem der Fadenführer 33 bewegbar ist. Anstelle der mittigen Anbringung des Fadenführerfingers 6 auf der Welle 7 ist es auch möglich, diesen Fadenführerfinger außerhalb des Gehäuses 8 auf der Welle 7 festzulegen, wodurch das Gehäuse 8 vollständig gekapselt werden kann.

Auf der Welle 7 im Bereich der Halterung 6" des Fadenführerfingers 6 ist eine Scheibe 39 angeordnet, die konzentrisch zur Mittelachse der Welle 7 Markierungen trägt. Diese Markierungen werden mit zwei Infrarot-Lichtschranken 40, 40' abgetastet. Durch eine bezüglich der Teilung der Markierungen versetzte Anordnung der beiden Infrarotlichtschranken 40, 40' ist es möglich, die jeweilige Richtung der Bewegung der Scheibe festzustellen. Somit ist die jeweilige Winkelstellung des Fadenführers 33 durch Zählen der Inkremente feststellbar. Um die Anzahl der Inkremente über den Schwenkweg weiter zu erhöhen, ist es möglich, weitere Infrarot-Lichtschranken vorzusehen, wobei sich dadurch die Anzahl der Inkremente für den gleichen Schwenkwinkel entsprechend erhöht. Um jedoch auch im Bereich der Umkehrpunkte des Fadenführers eine ausreichend hohe Auflösung für den Regler zu haben, bietet sich der Einsatz eines Beobachters an, wie er zum Beispiel in der DE 19 73 5581 A1 beschrieben ist. Die vom Infrarotsensor 40 gemessenen Inkremente werden an einen Mikroprozessor 23 weitergegeben, in dem sowohl ein Sollverlauf der Schwingung des Fadenführers gespeichert als auch ein Regler angeschlossen ist, der als Stellgröße den Strom I, der durch die Spule 15 fließt beziehungsweise die an die Spule 15 angelegte Spannung U, ausgibt. Damit kann über den gesamten Schwingungsverlauf das gewünschte Antriebsmoment erzeugt werden. Der Regler kann zur Verfeinerung der Regelung sowie einer gleichbleibenden Regelgüte als PID-Regler oder auch Zustandsregler ausgebildet sein, der des weiteren adaptiv ausgebildet ist, das heißt, sich ständig an die gegenwärtig gegebenen Bedingungen (zum Beispiel abweichende Fadenspannung, Lagerreibung etc.) anpaßt. Ebenso kann eine prädiktive Regelung, das heißt, unter Berücksichtigung eines vorab bekannten Verlaufes, vorgenommen werden. Durch weitere bekannte Regelprinzipien läßt sich eine immer weitere Verfeinerung der Regelgüte realisieren.

Der Sollverlauf der Fadenverlegung kann durch verschiedene, den Wicklungsaufbau der Kreuzspule begünstigende Parameter eingestellt werden. So läßt sich beispielsweise durch eine sich ändernde Amplitude eine Hubatmung des Fadenführers und damit eine Verringerung der Kantenhärte beziehungsweise Kantenwölbung der Kreuzspule erzielen. Des weiteren lassen sich verschiedenste Bewicklungsstrukturen wie Präzisions- oder Stufenpräzisionswicklungen ohne mechanische Einstellarbeiten realisieren. Ebenso ist die Verstellung der gewünschten Breite der Kreuzspule mit extrem geringem Aufwand verbunden.

Die Auswahl der Spiralfedern 20 und 21 kann so erfolgen, daß die Kennlinien nicht bis zu den Totpunkten geradlinig, sondern progressiv verlaufen, wodurch der elektromechanische Antrieb zur Erzielung der gleichen Schwingung entlastet wird.

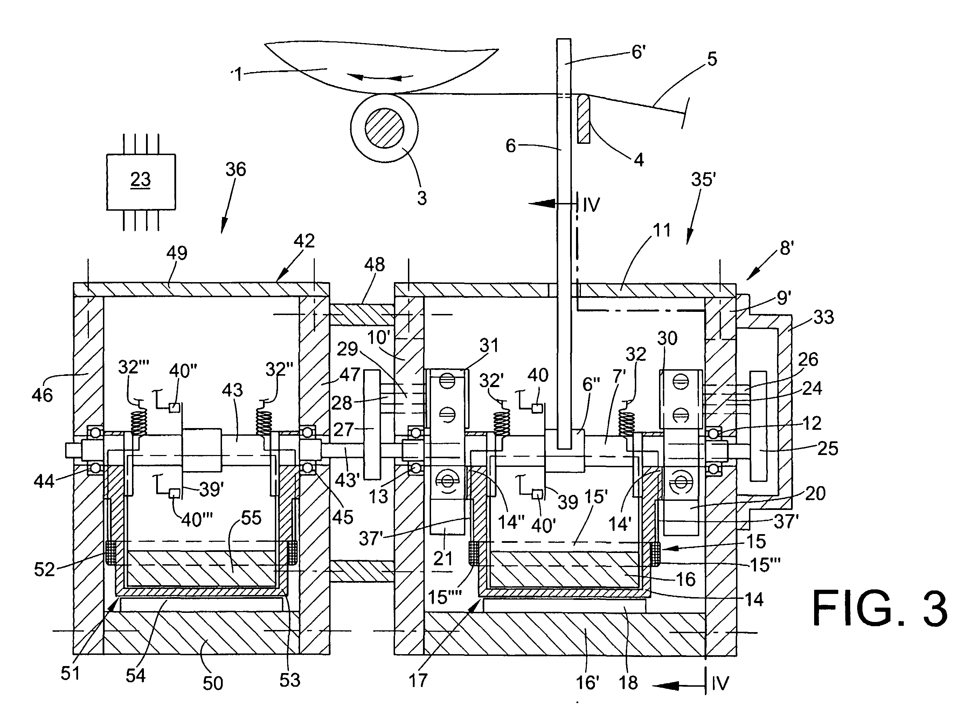

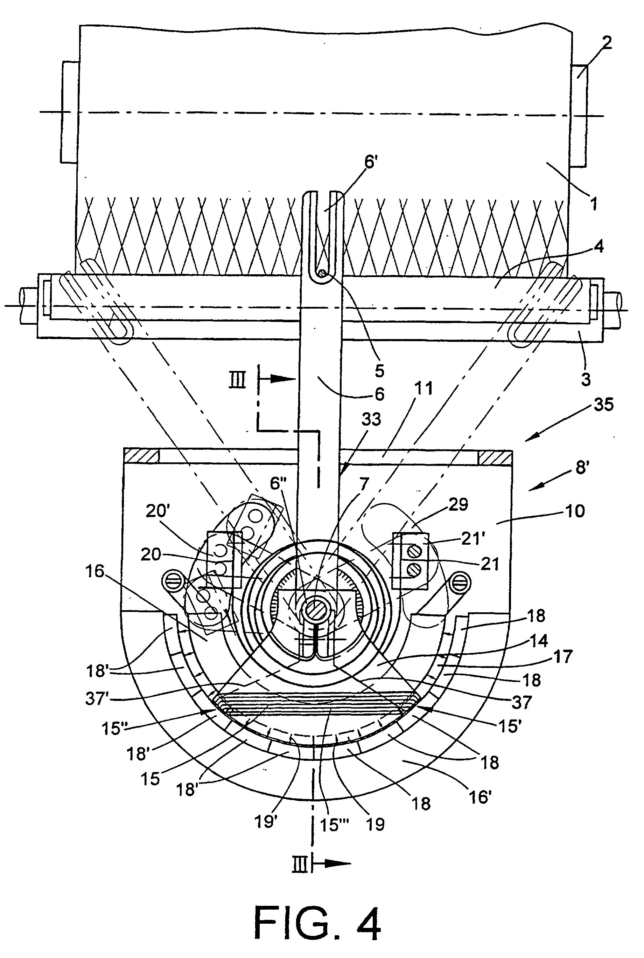

Bei der in den Figuren 3 und 4 dargestellten Variante der Erfindung ist der Antrieb 35' weitestgehend identisch mit dem Antrieb 35 gemäß der ersten Variante ausgebildet. Der wesentliche Unterschied besteht im Ersetzen der gemäß dem ersten Ausführungsbeispiel fixen Anordnung der Federaufhängungen durch bewegliche Anordnung in Form einer während der Schwingbewegung des Fadenführers 33 überlagerte Schwingbewegung dieser Aufhängungen 30 und 31. Dabei dienen die Federn 20 und 21 aufgrund der nicht mehr fixen Anordnung der Aufhängungen bei diesem Beispiel nicht mehr auch gleichzeitig als Stromzuführungen. Dennoch wurde hier beispielhaft die Verwendung von zwei Federn statt nur einer Feder beibehalten.

Die Stromzuführung erfolgt über flexible Zuleitungen 32 und 32', die schraubenlinienförmig dargestellt sind, jedoch durch beliebige andere flexible Stromzuführungen ersetzbar sind.

Im Vergleich zu der Welle 7 im ersten Ausführungsbeispiel ist die Welle 7' als Hohlwelle ausgebildet, in der ein in seinem Durchmesser reduzierter Teil 43' einer Welle 43 verläuft. Der Wellenteil 43' trägt Hebel 25 und 27, die ihrerseits über Stege 26 und 28 mit den Aufhängungen 30 und 31 für die Federn 20 und 21 verbunden sind. Die Stege 26 und 28 treten durch gekrümmte Langlöcher 24 und 29 durch die Seitenwände 9'und 10', die der Schwingbewegung der Stege 26 und 28, die sie über die Hebel 25 und 27 von der Welle 43 aufgeprägt erhalten, nicht im Wege stehen. Die Hebel 25 und 27 sind in separaten Gehäusen 33 und 48 angeordnet, um das Eindringen von Schmutz und damit die Beeinträchtigung der Funktionsfähigkeit der Einrichtung zu verhindern.

Die Welle 43 wird durch einen Antrieb 36 in eine schwingende Drehbewegung versetzt. Der Antrieb 36 ist, bis auf den Wegfall der Federn, weitestgehend identisch mit dem Antrieb 35'. In einem Gehäuse 42, welches aus Seitenwänden 46 und 47 sowie einem Außenjoch 50 und einem Deckel 49 besteht, ist ein Spulenträger 53 für eine Spule 52 längs eines Luftspaltes 51 bewegbar angeordnet. Der Luftspalt 51 ist durch eine Magnetanordnung 54 und ein Innenjoch 55 begrenzt. Die Spule 52 wird über Zuleitungen 32" und 32"' mit Spannung versorgt. Eine Markierungen aufweisende Scheibe 39' und Inkrementalgeber 40" und 40''' sorgen auch hier dafür, daß die jeweilige Winkelstellung der Welle 43 überwacht wird, um in der Steuereinrichtung, dem Mikroprozessor 23, verarbeitet zu werden.

Die Welle 43 ist in Lagern 44 und 45 sowie innerhalb der Welle 7' drehbar gelagert.

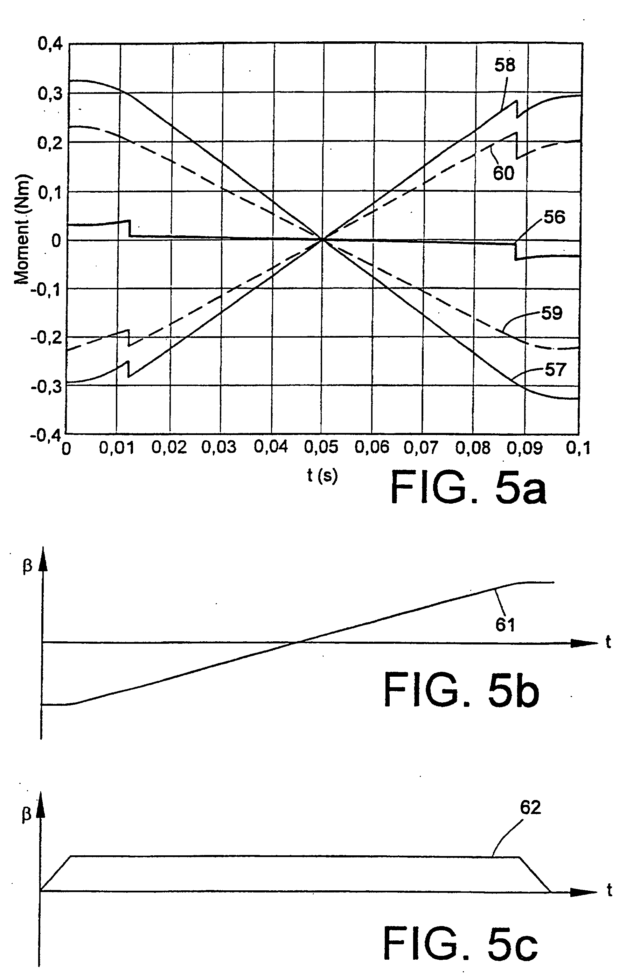

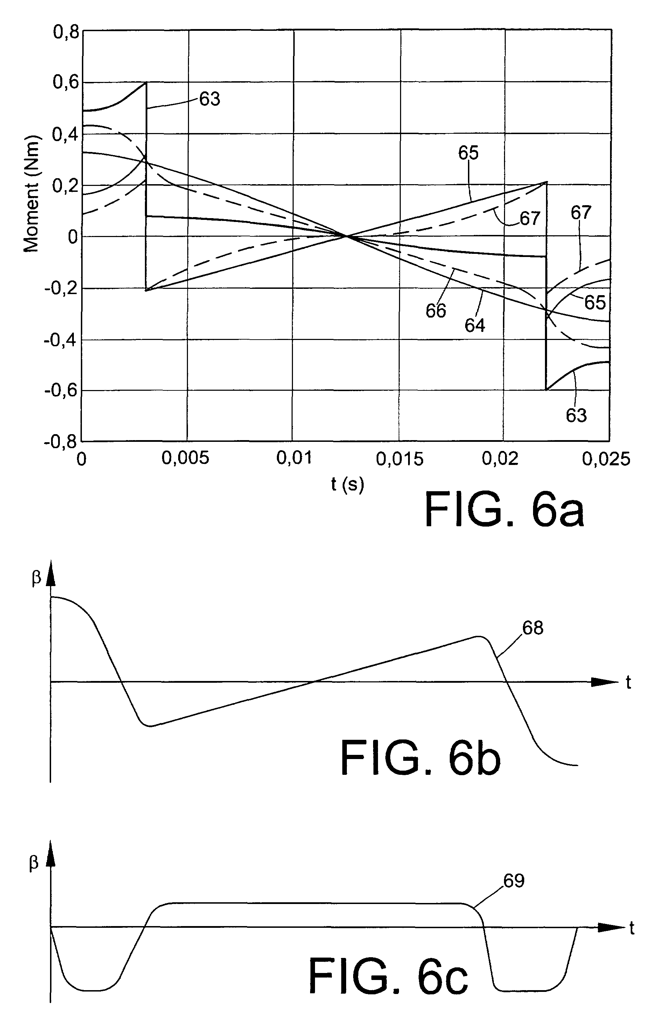

Mittels des Mikroprozessors 23 werden beide Antriebe 35' und 36 über entsprechende, hier nicht dargestellte Endstufen angesteuert. Anhand der Figuren 5 und 6 soll näher erläutert werden, wie in Abhängigkeit von der erforderlichen Schwingfrequenz des Fadenführers die Ansteuerung der Antriebe 35' und 36 erfolgen kann.

In Figur 5 ist ein möglicher Verlauf der Antriebsmomente bei einer Frequenz von 5 Hz dargestellt. Die Kurve 56 zeigt den Momentenverlauf des Gesamtmomentes. Dabei ist erkennbar, daß über nahezu 80 % der Amplitude ein sehr geringes Moment erforderlich ist, und nur in der Nähe der Totpunkte der Schwingung sprunghaft ein etwas größeres Moment zur Verfügung stehen muß. Mit 57 ist der Momentenverlauf einer fest angeordneten Feder gemäß dem ersten Ausführungsbeispiel dargestellt. Um bei diesem Momentenverlauf der festen Feder das Gesamtmoment 56 zu erreichen, ist das vom Antrieb 35 aufzubringende Moment 58 erforderlich.

Mit 59 ist der Momentenverlauf der Feder bei einem synchronen Mitschwingen, jedoch mit deutlich geringerer Schwingamplitude der Federaufhängungen, dargestellt. Dazu ist in Figur 5b auf der gleichen Zeitschiene der Verdrehwinkel β als Kurve 61 der Federaufhängung dargestellt. Die Amplitude der Schwingbewegung der Aufhängungen beträgt etwa 30 % der Schwingamplitude des Fadenführers selbst. In Figur 5c ist dann noch der Verlauf der Winkelgeschwindigkeit der Verstellung der Federaufhängung dargestellt. Diese Winkelgeschwindigkeit ω (Kurve 62) ist entsprechend der deutlich geringeren Amplitude gegenüber dem Fadenführer entsprechend gering.

Aufgrund des Momentenverlaufes 59 ergibt sich zur Erzielung des Gesamtmomentes 56 ein geringeres Moment 60 für den Antrieb 35'.

Es kann sich also bereits bei einer solch geringen Schwingfrequenz eine Leistungseinsparung für den Antrieb 35' ergeben, die größer ist als die Leistungsaufnahme des zweiten Antriebes 36. Dabei ist darauf hinzuweisen, daß für eine Schwingfrequenz von hier 5 Hz keine oder nur sehr schwache Federn verwendet würden, wenn prinzipiell nur eine solch niedrige Frequenz zur Anwendung käme. Das Beispiel schildert lediglich die Vorteile der Erfindung für ein Schwingsystem, welches für deutlich höhere Frequenzen ausgelegt ist, auch in einem niedrigeren Frequenzbereich. Der Vorteil des doppelten Schwingsystemes gegenüber dem einfachen Schwingsystem, wie es im ersten Ausführungsbeispiel dargestellt ist, ergibt sich aber deutlicher für höhere Frequenzen.

In Figur 6 (Figuren 6a bis 6c) ist der Momentenverlauf, der Verdrehwinkel und die Winkelgeschwindigkeit der Federaufhängung für eine Schwingfrequenz von 20 Hz dargestellt. Dabei kommt hier ein anderer Maßstab zur Anwendung.

63 zeigt das Gesamtmoment. Mit 64 ist der Momentenverlauf für eine fest angeordnete Feder dargestellt, während 65 den Verlauf des vom Antrieb 35' aufzubringenden Momentes wiedergibt.

Aufgrund des in Figur 6b dargestellten Verdrehwinkelverlaufs 68 ergibt sich der mit 66 bezeichnete Momentenverlauf für die Federn mit schwingender Aufhängung. Über den größten Teil der Schwingung verlaufen die Bewegungen von Fadenführer und Aufhängungen in gleicher Richtung, um damit den Antrieb 35' zu entlasten. Im Bereich der Totpunkte wind die Richtung der Verdrehung der Federaufhängungen zügig umgekehrt, so daß die Federn jetzt stärker gespannt werden, als dies bei fest angeordneten Aufhängungen gemäß erstem Ausführungsbeispiel der Fall war. Dadurch erfolgt eine deutliche Entlastung des Antriebes 35', insbesondere in diesem Bereich.

Figur 6c zeigt den Verlauf 69 der Winkelgeschwindigkeit der Aufhängungen. Dabei wird sichtbar, daß die Winkelgeschwindigkeit über den größten Teil des Fadenführerhubes konstant und relativ gering ist und nur im Bereich der Umkehrpunkte höhere Werte annimmt.

Durch die dargestellten Beispiele für unterschiedliche Schwingfrequenzen ist nur ein sehr geringer Teil der Variationsmöglichkeiten, die mit diesem Antrieb möglich sind, deutlich gemacht. Je nach gewünschtem Bewegungsverlauf des Fadenführers lassen sich hier beliebige Abwandlungen darstellen, die eine möglichst optimierte Energiebilanz bei exakter Einhaltung des gewünschten Verlegeprofils des Fadens ermöglichen.

Obwohl das im zweiten Beispiel dargestellte Gegenschwingsystem im Umlenkbereich eine sehr zügige Änderung der Federkraft beinhaltet, kommt es nicht zu einem schlagartigen mechanischen Lastwechsel, wie dies bei den Puffern im Schwingungsumkehrbereich beziehungsweise der schlagartigen Federversteifung im Stand der Technik der Fall ist.

## Patentansprüche

1. Fadenführer (33) zum traversierenden Zufuhren eines Fadens (5) zu einer rotierend angetriebenen Auflaufspule für die Erzeugung einer Kreuzspule (1) in einer Spuleinrichtung einer Textilmaschine, wobei der Fadenführer (33) einen Fadenführerfinger (6) aufweist und um eine im wesentlichen senkrecht zur Spulenachse orientierte Achse schwenkbar ist, wobei der Fadenführer (33) einen elektromechanischen Antrieb (35) besitzt, der gezielt die zur Erzeugung einer vorgebbaren Schwingung erforderlichen Momente dem System aufprägt und wobei mindestens ein mechanischer Energiespeicher (20, 21, 30, 31) zur Unterstützung der Bewegungsrichtungsumkehr dauerhaft während der gesamten Traversierbewegung mit dem Fadenführer gekoppelt ist,
**dadurch gekennzeichnet,**
**daß** der Fadenführer (33) mit dem mindestens einen mechanischen Energiespeicher (20, 21, 30, 31) direkt verbunden ist, dessen potentielle Energie nach den Totpunkten des Traversierbereiches hin stetig zunimmt und der dadurch mit dem Fadenführer (33) ein im wesentlichen harmonisch oszillierendes mechanisches System bildet.

2. Fadenführer nach Anspruch 1, **dadurch gekennzeichnet, daß** der mindestens eine Energiespeicher (20, 21, 30, 31) durch eine Feder gebildet ist.

3. Fadenführer nach Anspruch 2, **dadurch gekennzeichnet, daß** die Feder (20, 21, 30, 31) eine Drehfeder ist.

4. Fadenführer nach Anspruch 3, **dadurch gekennzeichnet, daß** die Drehfeder (20, 21, 30, 31) eine Spiralfeder ist.

5. Fadenführer nach Anspruch 4, **dadurch gekennzeichnet, daß** zwei Spiralfedern (20, 21, 30, 31) vorhanden sind.

6. Fadenführer nach Anspruch 5, **dadurch gekennzeichnet, daß** die Spiralfedern (20, 21,) der Stromzuführung zu dem elektromechanischen Antrieb (15, 15', 15", 16, 16', 18, 18', 22, 22', 24, 24', 25, 25') dienen.

7. Fadenführer nach Anspruch 5 oder 6, **dadurch gekennzeichnet, daß** die Windungsrichtung der Spiralfedern (20, 21, 30, 31) entgegengesetzt ist.

8. Fadenführer nach einem der Ansprüche 1 bis 7, **dadurch gekennzeichnet, daß** die Trägheit des schwingenden Fadenführers (33) und die Kennlinie des mindestens einen Energiespeichers (20, 21, 30, 31) so aufeinander abgestimmt sind, daß das System eine Resonanzfrequenz an der Obergrenze der benötigten Schwingfrequenz aufweist.

9. Fadenführer nach einem der Ansprüche 2 bis 8, **dadurch gekennzeichnet, daß** die mindestens eine Feder (20, 21) eine justierbare Aufhängung (20', 21') besitzt, durch die eine Ruhestellung des Fadenführers (33) in der Mitte der Schwingamplitude voreinstellbar ist.

10. Fadenführer nach einem der Ansprüche 2 bis 8, **dadurch gekennzeichnet, daß** die Aufhängung (30, 31) der mindestens einen Feder (20, 21) einen Antrieb (36) besitzt, der auf Basis der Steuersignale einer Steuervorrichtung (23) die Position der Aufhängung (30, 31) während der Schwingbewegung des Fadenführers (33) verstellt.

11. Fadenführer nach Anspruch 10, **dadurch gekennzeichnet, daß** der Antrieb (36) zum Verstellen der Aufhängung (30, 31) so ansteuerbar ist, daß er eine der Schwingfrequenz des Fadenführers (33) entsprechende Schwingfrequenz der Aufhängung (30, 31) erzeugt.

12. Fadenführer nach Anspruch 10 oder 11, **dadurch gekennzeichnet, daß** der Antrieb (36) zum Verstellen der Aufhängung (30, 31) so ansteuerbar ist, daß er mit größer werdender Schwingfrequenz des Fadenführers (33) eine zunehmende Phasenverschiebung zwischen der Schwingung des Fadenführers (33) und der Aufhängung (30, 31) erzeugt.

13. Fadenführer nach Anspruch 10, **dadurch gekennzeichnet, daß** der Antrieb (36) zum Verstellen der Aufhängung (30, 31) so ansteuerbar ist, daß im mittleren Schwingbereich, in dem die Winkelgeschwindigkeit ω des Fadenführers (33) konstant ist, die Bewegungen von Fadenführer (33) und Aufhängung (30, 31) gleichgerichtet und in der Nähe der Totpunkte, wenn sich die Winkelgeschwindigkeit ω stark verändert, jeweils entgegengesetzt sind.

14. Fadenführer nach einem der Ansprüche 1 bis 13, **dadurch gekennzeichnet, daß** der elektromechanische Antrieb (35) einen Luftspalt (17) besitzt, welcher von Magnetfeldlinien (19, 19', 23, 23') durchdrungen ist,
- daß entlang des Luftspaltes (17) Magnete (18, 18', 22, 22', 24, 24', 25, 25') angeordnet sind, die die im wesentlichen sich senkrecht durch den Luftspalt (17) erstreckenden Magnetfeldlinien (19, 19', 23, 23') erzeugen,
- daß beidseits des Luftspaltes (17) Joche (16, 16') zum Leiten des Magnetflusses angeordnet sind,
- daß der Fadenführer (33) mindestens eine elektrische Spule (15) besitzt, die in den Luftspalt (17) eintaucht und während der Traversierbewegung des Fadenführers (33) entlang-des Luftspaltes (17) bewegbar ist und
- daß die elektrische Spule (15) gesteuert bestrombar ist.

15. Fadenführer nach Anspruch 14, **dadurch gekennzeichnet, daß** sich der Luftspalt (17) über den Schwenkbereich der elektrischen Spule (15) erstreckt, der dem maximal einstellbaren Traversierhub des Fadenführers (33) entspricht.

16. Fadenführer nach Anspruch 14, **dadurch gekennzeichnet, daß** der Antrieb (36) der Aufhängung (30, 31) dem Antrieb (35, 35') des Fadenführers (33) in seinem Aufbau entspricht.

## Claims

1. Thread guide (33) for traversing and supplying a thread (5) to a rotating winding bobbin to produce a cross-wound bobbin (1) in a winding device of a textile machine, the thread guide (33) comprising a thread guide finger (6) and being pivotal about an axis oriented substantially perpendicularly to the bobbin axis, the thread guide (33) comprising an electromechanical drive (35) which impresses the moments required to produce a predeterminable oscillation on the system in a targeted manner and at least one mechanical energy store (20, 21, 30, 31) for supporting the reversal in the direction of movement in a prolonged manner during the entire traversing movement being coupled to the thread guide, **characterised in that** the thread guide (33) is directly connected to the at least one mechanical energy store (20, 21, 30, 31), of which the potential energy increases constantly toward the dead centres of the traversing region and which consequently forms with the thread guide (33) a substantially harmonically oscillating mechanical system.

2. Thread guide according to claim 1, **characterised in that** at least one energy store (20, 21, 30, 31) is formed by a spring.

3. Thread guide according to claim 2, **characterised in that** the spring (20, 21, 30, 31) is a torsion spring.

4. Thread guide according to claim 3, **characterised in that** the torsion spring (20, 21, 30, 31) is a flat spiral spring.

5. Thread guide according to claim 4, **characterised in that** there are two flat spiral springs (20, 21, 30, 31).

6. Thread guide according to claim 5, **characterised in that** the flat spiral springs (20, 21) are used to supply current to the electromechanical drive (15, 15', 15'', 16, 16', 18, 18', 22, 22', 24, 24', 25, 25').

7. Thread guide according to claim 5 or 6, **characterised in that** the winding direction of the flat spiral springs (20, 21, 30, 31) is opposed.

8. Thread guide according to any of claims 1 to 7, **characterised in that** the inertia of the oscillating thread guide (33) and the characteristic curve of the at least one energy store (20, 21, 30, 31) are matched to one another in such a way that the system has a resonance frequency at the upper limit of the required oscillation frequency.

9. Thread guide according to any of claims 2 to 8, **characterised in that** the at least one spring (20, 21) has an adjustable suspension (20', 21') owing to which a position of rest of the thread guide (33) can be pre-adjusted in the centre of the amplitude.

10. Thread guide according to any of claims 2 to 6, **characterised in that** the suspension (30, 31) of the at least one spring (20, 21) has a drive (36) which adjusts the position of the suspension (30, 31) during the oscillation of the thread guide (33) on the basis of the control signals of a controller (23).

11. Thread guide according to claim 10, **characterised in that** the drive (36) for adjusting the suspension (30, 31) can be controlled in such a way that it produces an oscillation frequency of the suspension (30, 31) corresponding to the oscillation frequency of the thread guide (33).

12. Thread guide according to claim 10 or 11, **characterised in that** the drive (36) for adjusting the suspension (30, 31) can be controlled in such a way that with increasing oscillation frequency of the thread guide (33) it produces an increasing phase displacement between the oscillation of the thread guide (33) and the suspension (30, 31).

13. Thread guide according to claim 10, **characterised in that** the drive (36) for adjusting the suspension (30, 31) can be controlled in such a way that in the central oscillating region, in which the angular velocity ω of the thread guide (33) is constant, the movements of thread guide (33) and suspension (30, 31) act in the same direction, and in the vicinity of the dead centres, if the angular velocity ω changes sharply, are respectively opposed.

14. Thread guide according to any of claims 1 to 13, **characterised in that** the electromechanical drive (35) has an air gap (17) penetrated by magnetic field lines (19, 19', 23, 23'),
- **in that** magnets (18, 18', 22, 22', 24, 24', 25, 25') are arranged along the air gap (17) and generate the magnetic field lines (19, 19', 23, 23') extending substantially perpendicularly through the air gap (17),
- **in that** yokes (16, 16') for conducting the magnetic flux are arranged on either side of the air gap (17),
- **in that** the thread guide (33) has at least one electrical coil (15) which immerses into the air gap (17) and can be moved along the air gap (17) during the traversing movement of the thread guide (33) and
- **in that** the electrical coil (15) can be supplied with current in a controlled manner.

15. Thread guide according to claim 14, **characterised in that** the air gap (17) extends over the pivotal region of the electrical coil (15) which corresponds to the maximum adjustable traversing stroke of the thread guide (33).

16. Thread guide according to claim 14, **characterised in that** the drive (36) of the suspension (30, 31) corresponds to the drive (35, 35') of the thread guide (33) in its construction.

## Revendications

1. Guide-fil (33) destiné à acheminer d'un côté à l'autr un fil (5) vers une bobine réceptrice entraînée en rotation pour la réalisation dune bobine à enroulement croisé (1) dans un dispositif à bobines dune machine textile, le guide-fil (33) étant muni d'un doigt de guidage du fil (6) et pouvant pivoter autour d'un axe orienté sensiblement perpendiculairement à l'axe de la bobine, le guide-fil (33) étant muni d'un entraînement ou moteur (35) électromécanique, qui implique de manière ciblée au système les couples nécessaires pour générer une oscillation prédéfinissable, et au moins un accumulateur d'énergie (20, 21, 30, 31) mécanique, destiné à favoriser l'inversion du sens du mouvement, étant couplé de manière permanente au guide-fil pendant l'ensemble du mouvement de traversée, **caractérisé en ce que** le guide-fil (33) est couplé directement avec au moins un accumulateur d'énergie (20, 21, 30, 31) mécanique, dont l'énergie potentielle augmente en permanence après les points morts de la zone de traversée et qui, de ce fait, forme avec le guide-fil (33) un système mécanique avec des oscillations sensiblement harmoniques.

2. Guide-fil selon la revendication 1, **caractérisé en ce qu'**au moins un accumulateur d'énergie (20, 21, 30, 31) mécanique est formé par un ressort.

3. Guide-fil selon la revendication 2, **caractérisé en ce que** le ressort (20, 21, 30, 31) est un ressort de torsion.

4. Guide-fil selon la revendication 3, **caractérisé en ce que** le ressort de torsion (20, 21, 30, 31) est un ressort à boudin.

5. Guide-fil selon la revendication 4, **caractérisé en ce qu'**il est prévu deux ressorts à boudin (20, 21, 30, 31).

6. Guide-fil selon la revendication 5, **caractérisé en ce que** les ressorts à boudin (20, 21) servent à acheminer le courant vers le moteur électromécanique (15, 15', 15", 16, 16', 18, 18', 22, 22', 24, 24', 25, 25').

7. Guide-fil selon la revendication 5 ou 6, **caractérisé en ce que** les spires des ressorts à boudin (20, 21, 30, 31) sont enroulées en sens opposé.

8. Guide-fil selon Tune quelconque des revendications 1 à 7, **caractérisé en ce que** la force d'inertie du guide-fil (33) oscillant et la courbe caractéristique d'au moins un accumulateur d'énergie (20, 21, 30, 31) sont ajustées Tune à l'autre de telle sorte que le système présente une fréquence de résonance à la limite supérieure de la fréquence d'oscillation nécessaire.

9. Guide-fil selon Tune quelconque des revendications 2 à 8, **caractérisé en ce qu'**au moins un ressort (20, 21) comporte une suspension (20', 21') ajustable, au moyen de laquelle il est possible de prédéfinir une position de repos du guide-fil (33) au centre de l'amplitud d'oscillation.

10. Guide-fil selon Tune quelconque des revendications 2 à 8, **caractérisé en ce que** la suspension (30, 31) d'au moins un ressort (20, 21) comporte un moteur (36) qui, en fonction des signaux de commande d'un dispositif de commande (23), règle la position de la suspension (30, 31) pendant le mouvement d'oscillation du guide-fil (33).

11. Guide-fil selon la revendication 10, **caractérisé en ce que** le moteur (36) destiné à régler la suspension (30, 31) peut être commandé de telle sorte qu'il génère une fréquence d'oscillation de la suspension (30, 31) correspondant à la fréquence d'oscillation du guide-fil (33).

12. Guide-fil selon la revendication 10 ou 11, **caractérisé en ce que** le moteur (36) destiné à régler la suspension (30, 31) peut être commandé de telle sorte que, en cas d'augmentation de la fréquence d'oscillation du guide-fil (33), il génère un décalage de phase croissant entre l'oscillation du guide-fil (33) et la suspension (30, 31).

13. Guide-fil selon la revendication 10, **caractérisé en ce que** le moteur (36) destiné à régler la suspension (30, 31) peut être commandé de telle sorte que, dans le domaine d'oscillation moyen, dans lequel la vitesse angulaire ω du guide-fil (33) est constante, les mouvements du guide-fil (33) et de la suspension (30, 31) sont orientés dans le même sens et sont opposés l'un à l'autre à proximité des points morts lorsque la vitesse angulaire ω varie fortement.

14. Guide-fil selon Tune quelconque des revendications 1 à 13, **caractérisé en ce que** le moteur électromécanique (35) comporte un entrefer (17) à travers lequel passent des lignes de champ magnétique (19, 19', 23, 23'),
- **en ce que** le long de l'entrefer (17) sont agencés des aimants (18, 18', 22, 22', 24, 24', 25, 25'), qui génèrent les lignes de champ magnétique (19, 19', 23, 23') qui s'étendent sensiblement perpendiculairement à travers l'entrefer (17),
- **en ce que** de part et d'autre de l'entrefer (17) sont agencées des culasses (16, 16') destinées à guider le flux magnétique,
- **en ce que** le guide-fil (33) comporte au moins une bobine électrique (15), qui plonge dans l'entrefer (17) et qui est mobile le long de l'entrefer (17) pendant le mouvement de traversée du guide-fil (33), et
- **en ce que** la bobine électrique (15) peut être parcourue par un courant, de manière commandée.

15. Guide-fil selon la revendication 14, **caractérisé en ce que** l'entrefer (17) couvre le domaine de pivotement de la bobine électrique (15), lequel correspond au réglage maximum de la course de traversée du guide-fil (33).

16. Guide-fil selon la revendication 14, **caractérisé en ce que** la structure du moteur (36) de la suspension (30, 31) correspond à la structure du moteur (35, 35') du guide-fil (33).
